(19)

Europäisches
Patentamt
European
Patent Office
Office européen
des brevets

(11) **EP 2 130 590 A2**

(12) **EUROPEAN PATENT APPLICATION**

(43) Date of publication:
**09.12.2009 Bulletin 2009/50**

(51) Int Cl.:
*B01J 35/04* (2006.01)     *B01J 29/00* (2006.01)
*B01D 53/92* (2006.01)     *F01N 3/00* (2006.01)

(21) Application number: **08022266.4**

(22) Date of filing: **22.12.2008**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(30) Priority: **20.05.2008 PCT/JP2008/059275**

(71) Applicant: **IBIDEN CO., LTD.**
**Gifu 503-8604 (JP)**

(72) Inventors:
• **Kazushige, Ohno**
**Ibi-gun**
**Gifu 501-0695 (JP)**

• **Masafumi, Kunieda**
**Ibi-gun**
**Gifu 501-0695 (JP)**
• **Takahiko, Ido**
**Ibi-gun**
**Gifu 501-0695 (JP)**

(74) Representative: **HOFFMANN EITLE**
**Patent- und Rechtsanwälte**
**Arabellastrasse 4**
**81925 München (DE)**

(54) **Honeycomb structure**

(57)     A honeycomb structure includes a first end face, a second end face disposed opposite the first end face along a longitudinal direction of the honeycomb structure, and a honeycomb unit. The honeycomb unit has plural cell walls extending along the longitudinal direction to define plural cells. The honeycomb unit includes 50 to 60 mass% of zeolite, 15 to 25 mass% of inorganic fibers, and 20 to 32 mass% of alumina that is not contained in the inorganic fibers. An opening ratio Y(%) of the honeycomb unit satisfies an expression $57 \leq Y \leq 0.7X + 25$, where X (mass%) is a zeolite content of the honeycomb unit.

EP 2 130 590 A2

**Description**

BACKGROUND OF THE INVENTION

1. Field of the Invention

The present invention relates to honeycomb structures.

2. Description of the Related Art

While various technologies have been developed for the treatment of automobile exhaust gases, there has never been a fully satisfactory exhaust gas control measure in place, partly due to the ever-increasing traffic. Automobile exhaust gas regulations are headed for further tightening, both domestically and globally. Among others, regulations of nitrogen oxides ("NOx") in diesel exhaust gases are being enforced with increasing severity.

Conventionally, elimination or reduction of NOx has been attempted by controlling the engine combustion systems, but now such method is proving insufficient. Against this background, diesel NOx treatment systems have been proposed which are based on a NOx reduction system (called a selective catalytic reduction (SCR) system) that employs ammonia as a reducing agent.

As a catalyst support used in such systems, honeycomb structures are known, as disclosed in WO2005/063653 A1. The honeycomb structure disclosed in this publication includes a honeycomb unit which is formed by mixing γ alumina, ceria, zirconia, zeolite, or the like, with inorganic fibers and an inorganic binder, and molding the mixture in a honeycomb shape that is then fired.

Japanese Patent No. 2675321 discloses a NOx treating method that employs a honeycomb catalyst having through holes with an equivalent diameter of 1.5 to 5 mm and a cell wall thickness of 0.3 to 0.9 mm, where the ratio of the pore volume in a specific pore range to the entire pore volume is 40% or more. According to this method, NOx in diesel engine exhaust gas is reduced by ammonia. This honeycomb catalyst is designed to provide sufficient strength and high NOx treatment performance.

In the honeycomb structure disclosed in WO2005/063653 A1, when the honeycomb unit is manufactured using zeolite as a main material that is molded and fired, the honeycomb unit may not be able to maintain a sufficient strength if the amount of zeolite is increased. If a honeycomb unit with reduced strength is used to manufacture a honeycomb structure in an SCR system, the SCR system may fail to maintain the proper function as a NOx treating catalyst for automobile exhaust gases.

In the case of the honeycomb catalyst according to the aforementioned JP Patent No. 2675321, a necessary strength is provided by making the thickness of the honeycomb cell walls rather thick, specifically 0.3 mm or greater. However, as the cell wall thickness increases, the exhaust gas may fail to penetrate inside the cell walls sufficiently. Thereby, reactions take place on the surface of the cell walls alone, so that the entire cell walls cannot be effectively utilized.

Generally, when the thickness of the honeycomb cell walls is increased and the equivalent diameter of the through holes is reduced, the area occupied by the through holes (cells) decreases. As a result, when the honeycomb catalyst is used for treating exhaust gases, the pressure loss of the exhaust gas as it flows increases.

Thus, in order to obtain desired flow characteristics and treatment performance for the same automobile exhaust gas, the opening ratio of the honeycomb needs to be increased and the size of the honeycomb catalyst also needs to be increased. It has been problematic, however, to use such a honeycomb catalyst as a NOx treating catalyst for automobile exhaust gases, where light-weight and small size are required.

SUMMARY OF THE INVENTION

Thus, it is a general object of the present invention to provide a honeycomb structure in which one or more of the aforementioned problems of the related art are eliminated.

A more specific object is to provide a honeycomb structure that can be mounted on an automobile as an exhaust gas treating catalyst, and that can provide high exhaust gas treating performance with low pressure loss.

According to one aspect of the present invention, honeycomb structure includes a first end face; a second end face disposed opposite the first end face along a longitudinal direction of the honeycomb structure; and a honeycomb unit having plural cell walls extending along the longitudinal direction from the first end face toward the second end face to define plural cells. The honeycomb unit includes 50 to 60 mass% of zeolite, 15 to 25 mass% of inorganic fibers, and 20 to 32 mass% of alumina that is not contained in the zeolite or the inorganic fibers. An opening ratio $Y(\%)$ of the honeycomb unit satisfies an expression $57 \leq Y \leq 0.7X+25$, where $X$ (mass%) is a zeolite content of the honeycomb unit.

In a preferred embodiment, the cell walls may have a porosity ranging from 25 to 40%.

In another preferred embodiment, the honeycomb unit may have a cell density ranging from 39 to 124 cells/cm$^2$.

In another preferred embodiment, a zeolite content per apparent unit volume of the honeycomb unit is 230 g/L or more.

In another preferred embodiment, the zeolite may include at least one of zeolite β, zeolite Y, ferrierite, ZSM-5, mordenite, faujasite, zeolite A, and zeolite L.

In another preferred embodiment, the zeolite may have a silica to alumina molar ratio (silica/alumina) ranging from 30 to 50.

In another preferred embodiment, the zeolite may be ion-exchanged with at least one of Fe, Cu, Ni, Co, Zn, Mn, Ti, Ag, and V.

In another preferred embodiment, the zeolite may be ion-exchanged with Fe.

In yet another embodiment, the inorganic fibers may include at least one of alumina fibers, silica fibers, silicon carbide fibers, silica alumina fibers, glass fibers, potassium titanate fibers, and aluminum borate fibers.

In another preferred embodiment, the alumina may be derived from at least one of alumina sol, alumina particles, and a precursor of alumina particles.

In another preferred embodiment, a plurality of the honeycomb units may be joined by interposing an adhesive.

Thus, a honeycomb structure can be provided that can be mounted on a vehicle as an automobile exhaust gas treating catalyst, and that can provide high exhaust gas treating performance at low pressure loss.

BRIEF DESCRIPTION OF THE DRAWINGS

These and other objects, features and advantages of the invention will be apparent to those skilled in the art from the following detailed description of the invention, when read in conjunction with the accompanying drawings in which:

> FIG. 1A shows a perspective view of a honeycomb structure according to an embodiment of the present embodiment which includes plural honeycomb units;
> FIG. 1B shows a perspective view of a honeycomb structure according to another embodiment which is formed of a single honeycomb unit;
> FIG. 2 shows a perspective view of one of the honeycomb units of the honeycomb structure shown in FIG. 1A; and
> FIG. 3 shows a graph indicating a relationship between the zeolite content and the opening ratio of honeycomb units according to Examples and Comparative Examples.

DETAILED DESCRIPTION OF THE PREFERRED EMBODIMENTS

The present invention is based on studies conducted on the influence of the material components of a honeycomb unit, such as zeolite, inorganic fibers, and alumina, and the honeycomb unit cell structure, on the catalyst performance of the honeycomb unit, which is the basic unit of a honeycomb structure.

In order to improve the strength of a honeycomb unit, the zeolite content should be reduced, and the content of inorganic fibers or alumina should be increased while reducing the opening ratio, so that the cells are densely formed.

On the other hand, for increasing the catalyst performance of the cell walls per se in which catalytic actions take place, the zeolite content needs to be increased. In order to reduce the pressure loss of the exhaust gas due to the honeycomb structure, the opening ratio of the honeycomb structure needs to be increased.

Further, in order to obtain a small and light-weight honeycomb unit, it is necessary to reduce the thickness of the cell walls to allow easier penetration of the exhaust gas into the cell walls, so that not only the cell wall surface portions but also the entire cell walls can be utilized as catalyst efficiently.

Quantitative analysis of the relationships among the above parameters showed that honeycomb structures according to various embodiments of the present invention are suitable as a vehicle-mounted catalyst for treating NOx in diesel exhaust gases.

A honeycomb structure according to an embodiment includes a first end face, a second end face located opposite the first end face along a longitudinal direction of the honeycomb structure, and a honeycomb unit. The honeycomb unit has plural cell walls extending along the longitudinal direction to define plural cells. The honeycomb unit contains 50 to 60 mass% of zeolite, 15 to 25 mass% of inorganic fibers, and 20 to 32 mass% of alumina that is not contained in the zeolite or inorganic fibers. In the honeycomb structure according to the embodiment, the opening ratio $Y$ (%) of the honeycomb unit is such that $57 \leq Y \leq 0.7X+25$, where $X$ (mass%) is the zeolite content of the honeycomb unit.

The honeycomb structure of the present embodiment may include one or more of the honeycomb units, which are fired bodies.

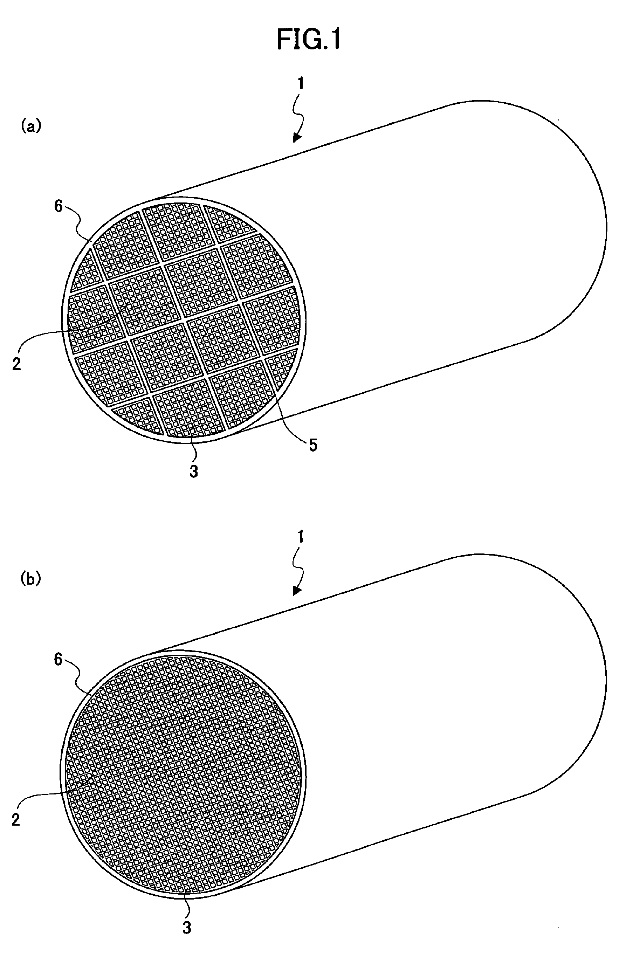

FIG. 1A shows a perspective view of a honeycomb structure 1 that includes plural honeycomb units 2 that are joined with an adhesive 5. Each of the honeycomb units 2 has cells 3 arranged in parallel. Preferably, the side surfaces of the honeycomb structure 1 (i.e., the surfaces parallel to the longitudinal direction of the cells) are coated with a coating material layer 6 in order to maintain a necessary strength.

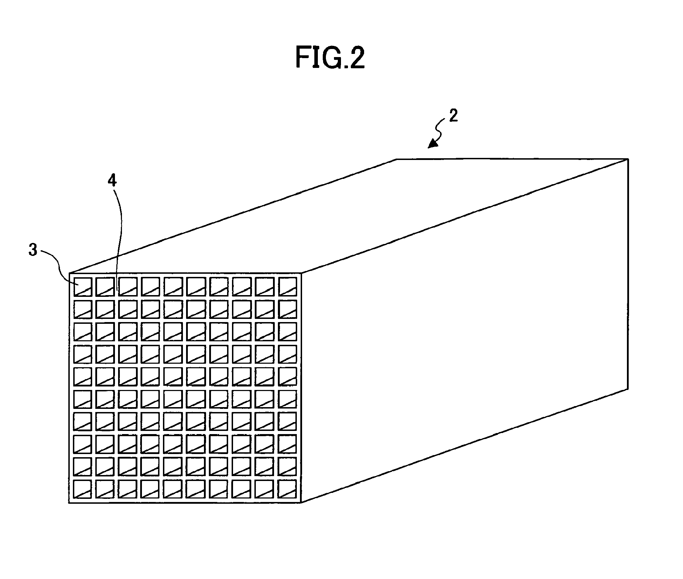

FIG. 2 shows a perspective view of one of the honeycomb units 2. As shown, plural walls 4 extend in the longitudinal direction, thus defining the cells 3.

Preferably, the honeycomb unit 2 contains zeolite, inorganic fibers, and an alumina source which may include an alumina inorganic binder and/or alumina particles. The honeycomb unit 2 may further contain inorganic particles other than the zeolite and alumina particles.

As mentioned above, the honeycomb unit according to the present embodiment contains 50 to 60 mass% of zeolite, 15 to 25 mass% of inorganic fibers, and 20 to 32 mass% of alumina that is not contained in the inorganic fibers. In the honeycomb unit 2, the zeolite contributes to the treatment of NOx in automobile exhaust gas. If the content of zeolite is less than 50 mass%, the NOx treatment performance of the honeycomb unit may become insufficient. If the content of zeolite exceeds 60 mass%, the necessary strength of the honeycomb unit as an automobile exhaust gas NOx treating catalyst may not be maintained.

If the content of inorganic fibers is less than 15 mass%, the necessary strength of the honeycomb unit may not be maintained. If the inorganic fiber content exceeds 25 mass%, the relative zeolite content decreases, so that the NOx treating action of the honeycomb unit may decrease.

The alumina source, such as alumina particles and/or alumina sol, is added during the manufacture of the honeycomb unit for strength increasing purposes. The content of alumina in the honeycomb unit is 20 to 32 mass%, excepting the alumina that may exist in zeolite or inorganic fibers. Because alumina enhances the bonding force between particles, the honeycomb unit strength may become insufficient if the alumina content is less than 20 mass%. On the other hand, if the alumina content exceeds 32 mass%, the relative zeolite content decreases, resulting in a decrease in NOx treatment performance or the strength of the honeycomb unit. The alumina that is present in the honeycomb unit may be derived from the alumina sol added as a binder, or other alumina sources, as well as from the material alumina particles.

In the honeycomb unit of the present embodiment, the ratio of the area of the opening portions in a cross section (in which there are a number of cell openings) perpendicular to the longitudinal direction of the cells of the honeycomb unit, or the opening ratio, is 57% or more. The opening ratio of the honeycomb unit directly influences the exhaust gas flow resistance. If the opening ratio is less than 57%, the pressure loss of the exhaust gas to be treated as it flows may become excessive.

Generally, an exhaust gas NOx treating catalyst for automobiles having a honeycomb structure needs to be small, and light-weight. It also needs to have sufficient strength to withstand the vibrations and stresses during the running of the automobile. The catalyst also needs to have a low pressure loss, while providing a sufficient NOx treatment performance.

In the honeycomb unit of the present embodiment, a certain quantitative relationship is satisfied between the zeolite content and the opening ratio. Specifically, the opening ratio Y(%) of the honeycomb unit satisfies the following expression:

$$Y \le 0.7X + 25$$

where X (mass%) is a zeolite content of the honeycomb unit.

The above expression defines an upper limit of the opening ratio Y of the honeycomb unit, which was determined based on experiments. Qualitatively, by increasing the zeolite content X in the honeycomb unit in order to improve the NOx treatment performance per unit volume of the honeycomb unit, the opening ratio Y can be increased correspondingly. Namely, the NOx treating catalyst performance can be maintained by increasing the opening portions in the honeycomb unit while reducing the cell wall portions. The greater the opening ratio, the better is the honeycomb unit as a vehicle-mounted catalyst, because a greater opening ratio means a smaller flow resistance against the exhaust gas to be treated. The upper limit of the opening ratio Y(%) of the honeycomb unit is 67% when the zeolite content is 60 mass% according to the above expression.

In the following, the honeycomb structure is described in greater detail.

(Honeycomb unit)

As shown in FIG. 2, the honeycomb unit 2 has the multiple cells 3, which are through holes. The cross sectional shape of the individual cells 3 of the honeycomb unit 2 is not particularly limited. While the cells 3 shown in FIG. 2 have square cross sections, the cross sectional shape of the cells 3 may be substantially triangular, substantially hexagonal, circular, a combination of a square and an octagon or the like.

Preferably, the porosity of the cell walls of the honeycomb unit is in a range of from 25 to 40%. If the proportion of the pores is too small, the exhaust gas may not be able to penetrate deep inside the cell walls. A qualitative analysis has shown that when the porosity is less than 25%, the exhaust gas fails to penetrate deep inside the cell walls sufficiently, possibly resulting in an insufficient NOx treatment ratio. If the porosity exceeds 40%, the strength of the cell walls may become insufficient.

Preferably, the honeycomb unit has a cell density in the cross section of the honeycomb unit in a range of from 39 to 124 cells/cm$^2$. If the cell density is less than 39 cells/cm$^2$, the amount of cell wall that contributes to NOx treatment decreases, resulting in a decrease in NOx treatment performance. If the cell density exceeds 124 cells/cm$^2$, the area of an individual cell decreases so much that the pressure loss may become excessive when used as a NOx treating catalyst.

Preferably, in the honeycomb unit of the honeycomb structure, the zeolite content per unit volume of the honeycomb unit is 230 g/L or greater, and more preferably in a range of from 245 to 270 g/L. If the zeolite content per unit volume of the honeycomb unit is less than 230 g/L, the NOx treatment performance of the honeycomb unit as a catalyst may become insufficient. When the zeolite content exceeds 270 g/L, a necessary strength of the honeycomb unit and therefore the strength of the honeycomb structure may not be maintained.

Preferably, the thickness of the cell walls of the honeycomb unit of the present embodiment is 0.15 mm or more and 0.35 mm or less, and more preferably 0.15 mm or more and 0.27 mm or less. If the thickness of the cell walls is less than 0.15 mm, a necessary strength of the honeycomb unit may not be maintained. If the thickness of the cell wall exceeds 0.35 mm, the exhaust gas may fail to penetrate deep inside the cell walls, thereby causing a decreases in NOx treatment performance.

The honeycomb unit contains zeolite, alumina, and inorganic fibers. In addition, the honeycomb unit may contain an inorganic binder other than alumina sol, or inorganic particles other than zeolite and alumina.

(Zeolite)

In the honeycomb unit, zeolite particles are bound by inorganic binder particles such as alumina particles. Examples of the zeolite are zeolite β, zeolite Y, ferrierite, ZSM-5, mordenite, faujasite, zeolite A, zeolite L and the like, which may be used individually or in combination.

Preferably, the silica to alumina molar ratio (silica/alumina) of zeolite is in a range of from 30 to 50.

Preferably, an ion-exchanged zeolite obtained by ion-exchanging any of the aforementioned zeolites may be used. Either zeolite that is ion-exchanged in advance may be used when forming a honeycomb unit, or zeolite may be ion-exchanged after the honeycomb unit is formed. Preferably, the ion-exchanged zeolite may include zeolite that is ion-exchanged with at least one of metal species Fe, Cu, Ni, Co, Zn, Mn, Ti, Ag, and V. These metal species may be used individually or in combination.

Preferably, the zeolite content per apparent unit volume of the honeycomb unit is 230 g/L. From a different perspective, the content of zeolite (compositional proportion) in the honeycomb unit is in a range of from 50 to 60 mass%. Because zeolite contributes to NOx treatment, a greater zeolite content in the honeycomb unit is preferable. However, if the zeolite content alone is increased, the content of other constituent substances (such as inorganic fibers and inorganic binder) has to be reduced, resulting in a decrease in the honeycomb unit strength. If the opening ratio of zeolite is reduced too much, the flow resistance against the exhaust gas during NOx treatment reaction may become excessive.

The zeolite may contain secondary particles, of which an average particle diameter is preferably in a range of from 0.5 to 10 μm. The average particle diameter of the secondary particles may be measured using the material zeolite particles prior to their firing in the form of a honeycomb unit.

(Alumina and other inorganic particles)

The honeycomb unit of the honeycomb structure according to the present embodiment preferably contains alumina particles. In addition, the honeycomb unit may contain inorganic particles other than alumina particles and zeolite particles. The inorganic particles provide the function of enhancing the honeycomb unit strength.

The inorganic particles contained in the honeycomb unit other than alumina particles and zeolite particles are not particularly limited. For example, the inorganic particles may include silica particles, zirconia particles, titania particles, ceria particles, mullite particles, or their precursors. Preferably, the alumina particles may include γ alumina, or boehmite, which is an alumina particle precursor. These inorganic particles other than alumina and zeolite particles may be contained individually or in combination.

In the inorganic particles, such as the alumina particles used in the honeycomb structure, hydroxyl groups are present in the stage of material inorganic particles prior to firing. As in the particles of most inorganic compounds that can be industrially utilized, the material zeolite particles in the honeycomb structure of the present embodiment prior to firing include hydroxyl groups. These hydroxyl groups cause a dehydrating condensation reaction when the honeycomb unit is fired, so that the bonding between the particles can be strengthened. Particularly, alumina particles of γ alumina, or boehmite, which is an alumina particle precursor, form a strong bond based on a dehydrating condensation reaction during firing.

In the honeycomb structure, the average particle diameter of the secondary particles of inorganic particles used as material other than zeolite is not greater than the average particle diameter of the secondary particles of zeolite. Particularly, the average particle diameter of the inorganic particles other than zeolite is in a range of from 10 to 100% the average particle diameter of zeolite. In this way, the strength of the honeycomb unit can be increased by the bonding force of the inorganic particles with the small average particle diameter.

(Inorganic fibers)

In the honeycomb structure, preferably the honeycomb unit contains inorganic fibers. Non-limiting examples of the inorganic fibers include one or more kinds of inorganic fibers selected from alumina fibers, silica fibers, silicon carbide fibers, silica alumina fibers, glass fibers, potassium titanate fibers, and aluminum borate fibers. These inorganic fibers may be mixed with zeolite or an inorganic binder at the material stage, and then a formed honeycomb unit may be fired. The inorganic fibers contribute to the honeycomb unit strength. The inorganic fibers may include short fibers such as whiskers, as well as long fibers.
The inorganic fibers are inorganic material having large aspect ratios (fiber length/fiber diameter) and are particularly effective in improving bending strength. The aspect ratio of the inorganic fibers is preferably in a range of from 2 to 1000, more preferably in a range of from 5 to 800, and still more preferably in a range of from 10 to 500. If the aspect ratio is less than 2, the contribution of the inorganic fibers to the honeycomb structure strength is small. If the aspect ratio exceeds 1000, clogging of the molding die may tend to occur more frequently during molding, resulting in poor moldability. Further, at the time of extrusion molding, for example, the inorganic fibers with large aspect ratios may break into different lengths, resulting in a reduced strength of the honeycomb unit.
When the inorganic fibers have a certain aspect ratio distribution, its average value is referred to as the aspect ratio of the inorganic fibers.

(Inorganic binder)

In the honeycomb structure, the honeycomb unit may contain an inorganic binder other than alumina sol as an alumina source. Because the honeycomb unit is a fired product, the honeycomb unit contains solid content alone, the water or the like in the inorganic binder having been evaporated. Thus, when the inorganic binder in the honeycomb unit is referred to, the reference is to the solid content in the inorganic binder.
Examples of the inorganic binder at the material stage include an inorganic sol and a clay-based binder. Examples of the inorganic sol are alumina sol, silica sol, titania sol, sepiolite sol, attapulgite sol, liquid glass and the like. Examples of the clay-based binder include white clay, kaolin, montmorillonite, clay of the double chain structure (such as sepiolite and attapulgite). These inorganic sols or clay-based binders may be used individually or in a mixture.

(Catalyst component)

In the honeycomb unit of the honeycomb structure, the cell walls may further support a catalyst component. Non-limiting examples of the catalyst component are noble metals, alkali metal compounds, and alkali earth metal compounds. The noble metal may include one or more noble metals selected from platinum, palladium, and rhodium. The alkali metal compound may include one or more compounds selected from potassium, sodium, and the like. The alkali earth metal compound may include a compound of barium.

(Manufacturing of honeycomb unit)

A process of manufacturing the honeycomb unit of the honeycomb structure is described below.
First, a raw material paste containing the aforementioned zeolite, inorganic fibers, and alumina source such as alumina sol and/or alumina particles in the aforementioned predetermined proportions is prepared. The raw material paste is molded into a honeycomb unit molded body by extrusion molding, for example. The raw material paste may additionally contain inorganic particles other than the above zeolite and alumina particles, an organic binder, a pore-forming material, a dispersion medium and/or a forming aid as needed.
Non-limiting examples of the organic binder are one or more organic binders selected from methylcellulose, carboxymethylcellulose, hydroxyethyl cellulose, polyethyleneglycol, phenol resin, epoxy resin, and the like. Preferably, the content of the organic binder is 1 to 10 parts by mass with respect to a total of 100 parts by mass of the solid content of the entire material.
The pore-forming material may include a powder of resin, such as an acrylic acid resin, a polyolefin resin, a polystyrene resin, and a polyester resin. The organic binder and the pore-forming material affect extrusion molding characteristics and play an important role in adjusting the porosity of the honeycomb unit. The amount of the pore-forming material may be increased or decreased depending on a desired porosity.

Non-limiting examples of the dispersion medium include water, an organic solvent (such as toluene), and alcohol (such as methanol). Non-limiting examples of the forming aid include ethylene glycol, dextrin, fatty acid soap, and polyalcohol.

The raw material paste, which is not particularly limited, is preferably mixed and/or kneaded sufficiently, using a mixer, an attritor, or a kneader or the like. The method of forming the raw material paste is not particularly limited. Preferably, the raw material paste is formed into a honeycomb unit molded body with a predetermined cell density and opening ratio, using an extruder or the like having a die with an appropriate cell density and opening ratio. The shape of the honeycomb unit molded body is determined in consideration of the contraction during the subsequent drying and firing steps.

The resultant honeycomb unit molded body is then dried using a drying apparatus which is not particularly limited. Non-limiting examples of the drying apparatus include a microwave drying apparatus, a hot-air drying apparatus, a dielectric drying apparatus, a reduced-pressure drying apparatus, a vacuum drying apparatus, and a freeze drying apparatus. The dried molded body is preferably degreased under conditions which are not particularly limited and may be selected in view of the kind or amount of organic matter contained in the molded body. Preferably, the molded body may be degreased at 400°C for two hours.

The dried and then degreased honeycomb unit molded body is further fired under firing conditions which are not particularly limited. Preferably, the honeycomb unit is fired at 600 to 1200°C and more preferably at 600 to 1000°C. If the firing temperature is less than 600°C, sintering may not proceed and a sufficient honeycomb unit strength may not be obtained. If the firing temperature exceeds 1200°C, the zeolite crystal may be destroyed, or sintering may proceed excessively, resulting in a failure to manufacture a porous honeycomb unit having an appropriate porosity.

(Honeycomb structure)

The honeycomb structure according to various embodiments may include one or more honeycomb units. In the case of the honeycomb structure having plural honeycomb units, the honeycomb units are stacked such that the through holes of the cells in the individual honeycomb units are oriented in the same direction. The honeycomb structure 1 shown in the perspective view of FIG. 1A includes the plural honeycomb units 2 which are joined by interposing the adhesive 5. Each of the honeycomb units 2 is formed such that its cells 3 are arranged in parallel along the longitudinal direction of the honeycomb unit 2. On the other hand, the honeycomb structure 1 shown in FIG. 1B is formed of the single honeycomb unit 2.

Thus, the honeycomb structure may include either one or more honeycomb units. Preferably, the side surfaces of the honeycomb structure (parallel to the longitudinal direction of the honeycomb structure) are coated with the coating material layer 6 for maintaining a necessary strength.

While the honeycomb structures shown in FIGs. 1A and 1B have a circular cross section, the cross section of the honeycomb structure may be other shapes, such as square, rectangular, hexagonal, or sectoral. The outer periphery of the honeycomb structure may be cut to shape or not. While the cross section of the honeycomb structure may be determined depending on the particular mode of use, preferably a uniform cross sectional area should be maintained throughout the longitudinal direction of the honeycomb structure.

(Manufacturing of honeycomb structure)

A process of manufacturing the honeycomb structure 1 shown in FIG. 1A which has plural honeycomb units is described below.

The honeycomb units obtained as described above are successively joined by coating their sides with adhesive material. The joined assembly of the honeycomb units is then dried and solidified to obtain a predetermined size. The side surfaces of the honeycomb unit assembly are then cut to a desired shape.

The adhesive used is not particularly limited and may include an inorganic binder mixed with inorganic particles, an inorganic binder mixed with inorganic fibers, or an inorganic binder mixed with inorganic particles and inorganic fibers. An organic binder may be further added to such an adhesive. The organic binder is not particularly limited and may include one or more kinds of organic binder selected from polyvinyl alcohol, methylcellulose, ethylcellulose, carboxymethylcellulose, and the like.

Preferably, the thickness of the adhesive layer via which the plural honeycomb units are joined is in a range of from 0.5 to 2 mm. The number of the honeycomb units joined may be determined appropriately depending on the size of the honeycomb structure. The honeycomb assembly obtained by joining the honeycomb units by interposing adhesive may be cut or ground as needed depending on the shape of the honeycomb structure.

The outer peripheral surfaces (side surfaces) of the honeycomb structure parallel to the longitudinal direction of the cells are coated with a coating material, which is then dried and solidified to obtain a coating material layer. In this way, the outer peripheral surface of the honeycomb structure can be protected and an enhanced strength can be obtained.

The coating material is not particularly limited and may be the same material as, or a different material from, the material of the adhesive. The blending ratio of the coating material may be the same as or different from that of the adhesive. The thickness of the coating material layer is not particularly limited; preferably, the thickness is in a range of from 0.1 to 2 mm. The coating material layer may or may not be formed.

After the plural honeycomb units are joined by interposing the adhesive, the assembly is preferably subjected to a heating process. When the coating material layer is provided, the assembly is preferably degreased after the adhesive layer and the coating material layer are formed. Degreasing enables the removal of any organic binder that may be contained in the adhesive layer or the coating material layer. The degreasing conditions may be appropriately determined in view of the kind or amount of organic matter contained. Preferably, the degreasing process is performed at about 700°C for about two hours.

In the example shown in FIG. 1A, the honeycomb structure 1 has a cylindrical outer shape and includes the plural box-shaped honeycomb units 2. The cross section of most of the honeycomb units 2 perpendicular to the longitudinal direction of the through holes is square. The honeycomb structure 1 is formed by joining the honeycomb units 2 by interposing the adhesive 5, cutting the peripheral portion to a cylindrical shape, and then forming the coating material layer 6 with coating material.

Alternatively, honeycomb units 2 having sectoral and square cross sections may be manufactured and then joined into a predetermined honeycomb structure shape, so that the cutting and grinding step can be omitted.

Hereafter, a process of manufacturing the honeycomb structure shown in FIG. 1B, which is formed of the single honeycomb unit, is described. The honeycomb structure of FIG. 1B can be manufactured in the same way as for the honeycomb structure of FIG. 1A, with the exception that the honeycomb structure has the single honeycomb unit.

Specifically, a honeycomb unit is formed in a cylindrical shape by cutting or grinding as needed, in the same way for manufacturing the honeycomb structure including the plural honeycomb units. The peripheral portion of the honeycomb unit is then provided with a coating material layer using the same adhesive as mentioned above, followed by the degreasing step. In this way, the honeycomb structure having the single honeycomb unit shown in FIG. 1B can be manufactured.

Examples

In the following, the honeycomb structures manufactured under various conditions are described. It is understood, however, that the present invention is not limited by any of the following examples.

Example 1

(Manufacturing of honeycomb unit)

54.9 mass% of Fe-zeolite particles (including 3 mass% of Fe ion-exchanged zeolite $\beta$, with the silica/alumina ratio of 40 and an average particle diameter of 2 $\mu$m (the "average particle diameter" indicates the average particle diameter of secondary particles; the same applies hereunder), 26.1 mass% of a solid content (alumina) of alumina sol (solid content 20 mass%), and 19 mass% of alumina fibers (average fibers diameter 6 $\mu$m, average fiber length 100 $\mu$m) were mixed. To the mixture was further added 10 parts by mass of an organic binder of methylcellulose relative to the total of 100 parts by mass of the above materials.

Further, small amounts of plasticizer, surfactant, and lubricant were added, to which water was further added to adjust viscosity while mixing and kneading the mixture, obtaining a mixture composition for molding. The mixture composition was then extrusion-molded using an extrusion molding machine, whereby a raw honeycomb molded body was obtained.

The Fe ion-exchanged zeolite used had been prepared by immersing zeolite particles in a solution of iron nitrate ammonium and then Fe ion-exchanging the zeolite particles. The ion-exchanged amount was determined by ICP emission spectrometry using the ICPS-8100 spectrometer from Shimadzu Corporation.

The resultant raw honeycomb molded body was sufficiently dried with a microwave drying apparatus and a hot-air drying apparatus, and then degreased at 400°C for 2 hours. The honeycomb molded body was then retained at 700°C for 2 hours for firing. As a result, there was obtained a rectangular-pillar-shaped honeycomb unit (cross section 35 mm $\times$ 35 mm) with rectangular (square) cells, having a wall thickness of 0.28 mm, a cell density of 65 cells/cm$^2$, an opening ratio of 60%, and the zeolite content per apparent unit volume of the honeycomb unit of 250 g/L. The porosity of the cell walls was measured with a mercury porosimeter.

Table 1 shows the relative amounts of the constituents of the honeycomb unit, its wall thickness, cell density, and opening ratio, as well as an upper limit value Y=(0.7$\times$X+25) of the opening ratio.

Table 1

| | Relative amounts (mass%) | | | Cell structure | | | | Evaluation | |
|---|---|---|---|---|---|---|---|---|---|
| | Zeolite | Alumina | Alumina fiber | Thickness ( mm) | Density ($/cm^2$) | Opening ratio(%) | Upper limit | Treatment ratio (%) | Pressure loss |
| Ex.1 | 54.9 | 26.1 | 19 | 0.28 | 65 | 60 | 63.4 | 90 | Low |
| Ex.2 | 54.9 | 26.1 | 19 | 0.30 | 47 | 63 | 63.4 | 86 | Low |
| Ex.3 | 54.9 | 26.1 | 19 | 0.28 | 78 | 57 | 63.4 | 95 | Low |
| Ex.4 | 58 | 23 | 19 | 0.20 | 93 | 65 | 65.6 | 89 | Low |
| Ex.5 | 50 | 31 | 19 | 0.28 | 78 | 57 | 60.0 | 87 | Low |
| Ex.6 | 50 | 31 | 19 | 0.20 | 124 | 60 | 60.0 | 80 | Low |
| Ex.7 | 60 | 21 | 19 | 0.28 | 78 | 57 | 67.0 | 98 | Low |
| Ex.8 | 60 | 21 | 19 | 0.30 | 47 | 63 | 67.0 | 96 | Low |
| Ex.9 | 60 | 21 | 19 | 0.25 | 54 | 66 | 67.0 | 90 | Low |
| Comp. Ex.1 | 54.9 | 26.1 | 19 | 0.20 | 93 | 65 | 63.4 | 76 | Low |
| Comp. Ex.2 | 54.9 | 26.1 | 19 | 0.25 | 116 | 53 | 63.4 | 98 | High |
| Comp. Ex.3 | 58 | 23 | 19 | 0.25 | 54 | 66 | 65.6 | 79 | Low |
| Comp. Ex.4 | 50 | 31 | 19 | 0.30 | 47 | 63 | 60.0 | 66 | Low |
| Comp. Ex.5 | 60 | 21 | 19 | 0.20 | 70 | 69 | 67.0 | 78 | Low |
| Comp. Ex.6 | 48 | 33 | 19 | 0.28 | 78 | 57 | 58.6 | 74 | Low |

(Manufacturing of honeycomb structure)

The side surfaces of the manufactured honeycomb unit was coated with a paste of coating material to a thickness of 0.5 mm, followed by drying and solidification at 120°C. The honeycomb unit was then retained at 700°C for 2 hours to degrease the adhesive layer and the coating material, thereby obtaining a cylindrical honeycomb structure (with the diameter of about 144 mm × length 150 mm) with the same shape as the honeycomb structure shown in FIG. 1A. The coating raw material paste had been prepared by mixing 29 mass% of alumina particles (average particle diameter 2 $\mu$m), 7 mass% of alumina fibers (average fiber diameter 6 $\mu$m, average fiber length 100 $\mu$m), 34 mass% of alumina sol (solid content 20 mass%), 5 mass% of carboxymethylcellulose, and 25 mass% of water.

Examples 2 through 9, and Comparative Examples 1 through 6

As shown in Table 1, honeycomb units and honeycomb structures according to Examples 2 through 9 and Comparative Examples 1 through 6 were manufactured in the same manner as for Example 1, with the exception that the relative amounts of zeolite, alumina sol, and alumina fibers, and the cell structure (cell wall thickness, cell density, and opening ratio) were changed.

Evaluation of honeycomb structure performance

Table 1 also shows the results of evaluation of the treatment ratios of NOx in exhaust gas by the honeycomb structures according to Examples 1 through 9 and Comparative Examples 1 through 6, and their pressure loss.

Measurement of NOx treatment ratio

Evaluation samples were obtained by cutting a cylindrical honeycomb portion measuring 30 mm in cross-sectional diameter and 50 mm in length from each of the honeycomb units of the Examples and Comparative Examples. The evaluation samples were heated at 700°C for 48 hours for simulated aging, and then retained at 250°C. Thereafter, simulated automobile exhaust gas with the composition shown in Table 2 was introduced at SV 35000/hr while heated at 250°C. Then, the amount of decrease (%) in the NO component in the simulated gas after its passage through the evaluation sample was measured as the NOx treatment (conversion) ratio (%).

Table 2

| Gas | Composition |
|-----|-------------|
| $N_2$ | Balance |
| $CO_2$ | 5 vol% |
| $O_2$ | 14 viol% |
| NO | 350 ppm |
| $NH_3$ | 350 ppm |
| $H_2O$ | 5 vol% |
| SV | 35000/hr |

Measurement of exhaust gas pressure loss

Each of the cylindrical honeycomb structures (diameter of about 144 mm × length 150 mm) according to the Examples and Comparative Examples was enwrapped with an alumina mat, and then put in a cylindrical metal case. The engine exhaust gas was passed through the metal case, and pressure loss was measured. More specifically, the exhaust gas was emitted while the engine rotated at 1500 rpm with the torque of 50 Nm, and the pressure loss 5 minutes after the start of the flow of the gas was measured. The "low" evaluation indicates that the pressure loss was 1.0 kP or less, and the "high" evaluation indicates the pressure loss of greater than 1.0 kP.

Analysis of measurement result

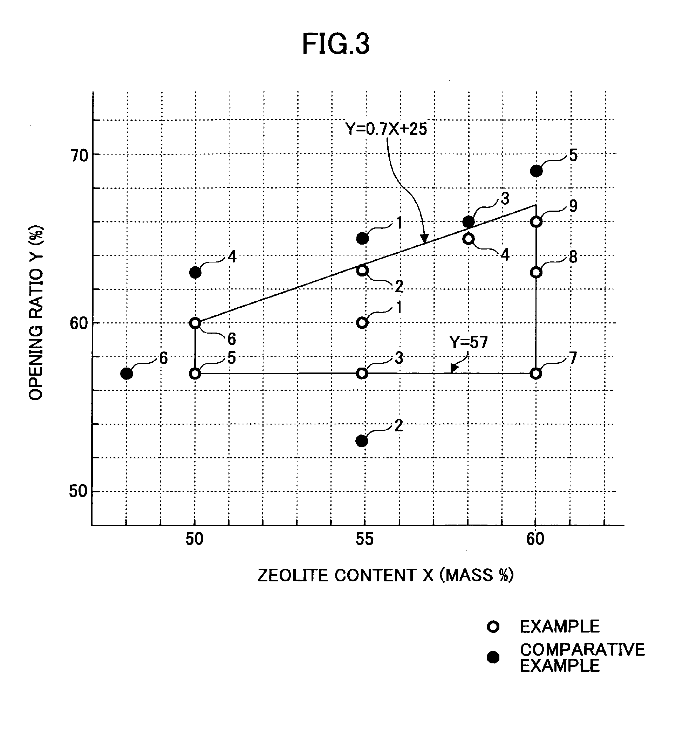

Table 1 shows the results of measurement of the NOx treatment ratio and the exhaust gas pressure loss according to Examples 1 through 9 and Comparative Examples 1 through 6. FIG. 3 shows a graph indicating relationships between zeolite content and opening ratio. In FIG. 3, the white circles are for the Examples and the black circles are for the Comparative Examples, the associated numbers denoting the numbers of the Examples and Comparative Examples.
It can be seen that the honeycomb structures of Examples 1 through 9 exhibited high NOx treatment ratios of 80% or more, while the honeycomb structures of Comparative Examples 1, and 3 through 5 exhibited low NOx treatment ratios ranging from 66 to 79% even when the zeolite content was 50% or more. This is believed due to the latter's opening ratios exceeding the value of Y of the equation Y=(0.7X+25). The low NOx treatment ratio of Comparative Example 6 is believed due to its low zeolite content at 48%.
The pressure losses of the honeycomb structures of Examples 1 through 9 and Comparative Examples 1, and 3 through 6 were less than 1.0 kPa, whereas the pressure loss of the honeycomb structure of Comparative Example 2 was more than 1.0 kPa. This is believed due to the fact that, while the opening ratios of the honeycomb units of the honeycomb structures of Examples 1 through 9 and Comparative Examples 1, and 3 through 6 were 57% or more, the opening ratio of the honeycomb unit of the honeycomb structure according to Comparative Example 2 was small at 53%, with the resultant increase in flow resistance against the exhaust gas.
Thus, the honeycomb structures according to Examples 1 through 9, which satisfy the expression 57≤Y≤(0.7X+25) concerning the relationship between the zeolite content X (mass%) and the opening ratio Y (%) of the honeycomb unit, exhibited superior performance in both NOx treatment ratio and pressure loss during the passage of exhaust gas. It can be seen, therefore, that the honeycomb structures according to Examples 1 through 9 are suitable for the automobile exhaust gas treatment purposes. The honeycomb structures according to Comparative Examples 1 through 6 were inferior in either NOx treatment ratio or pressure loss, and are not suitable for automobile exhaust gas treatment purposes.
Thus, the honeycomb structures according to various embodiments of the present invention include high-strength honeycomb units reinforced with inorganic fibers, and can provide high NOx treatment ratios at low pressure loss. The honeycomb structures can be therefore suitably used for automobile exhaust gas treatment purposes, which require small size and lightweight. In particular, the honeycomb structures of the various embodiments of the present invention can be suitably used in selective catalytic reduction (SCR) systems using zeolite (such as diesel exhaust gas treatment systems using ammonia).

It is to be understood that the above-described embodiments are merely illustrative of some of the many specific embodiments that represent applications of the principles of the present invention. Clearly, numerous and other arrangements can be readily devised by those skilled in the art without departing from the scope of the invention.

## Claims

1. A honeycomb structure comprising:

   a first end face;
   a second end face disposed opposite the first end face along a longitudinal direction of the honeycomb structure; and
   a honeycomb unit having plural cell walls extending along the longitudinal direction from the first end face toward the second end face to define plural cells,

   wherein the honeycomb unit includes 50 to 60 mass% of zeolite, 15 to 25 mass% of inorganic fibers, and 20 to 32 mass% of alumina that is not contained in the zeolite or the inorganic fibers,
   wherein an opening ratio Y(%) of the honeycomb unit satisfies an expression $57 \leq Y \leq 0.7X+25$, where X (mass%) is a zeolite content of the honeycomb unit.

2. The honeycomb structure according to claim 1, wherein the cell walls have a porosity ranging from 25 to 40%.

3. The honeycomb structure according to claim 1 or 2, wherein the honeycomb unit has a cell density ranging from 39 to 124 cells/cm$^2$.

4. The honeycomb structure according to any one of claims 1 through 3, wherein a zeolite content per apparent unit volume of the honeycomb unit is 230 g/L or more.

5. The honeycomb structure according to any one of claims 1 through 4, wherein the zeolite comprises at least one of zeolite $\beta$, zeolite Y, ferrierite, ZSM-5, mordenite, faujasite, zeolite A, and zeolite L.

6. The honeycomb structure according to any one of claims 1 through 5, wherein the zeolite has a silica to alumina molar ratio (silica/alumina) ranging from 30 to 50.

7. The honeycomb structure according to any one of claims 1 through 6, wherein the zeolite is ion-exchanged with at least one of Fe, Cu, Ni, Co, Zn, Mn, Ti, Ag, and V.

8. The honeycomb structure according to any one of claims 1 through 6, wherein the zeolite is ion-exchanged with Fe.

9. The honeycomb structure according to any one of claims 1 through 8, wherein the inorganic fibers comprise at least one of alumina fibers, silica fibers, silicon carbide fibers, silica alumina fibers, glass fibers, potassium titanate fibers, and aluminum borate fibers.

10. The honeycomb structure according to any one of claims 1 through 9, wherein the alumina is derived from at least one of alumina sol, alumina particles, and a precursor of alumina particles.

11. The honeycomb structure according to any one of claims 1 through 8, wherein a plurality of the honeycomb units are joined by interposing an adhesive.

# FIG.1

# FIG.2

# FIG.3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005063653 A1

- JP 2675321 B